# EUROPEAN PATENT APPLICATION

(11) **EP 4 517 591 A1**
(43) Date of publication of application: **05.03.2025**
(21) Application number: 23807062.7
(22) Date of filing: 19.05.2023
(51) Int. Cl.: G06N 3/08

(54) **SPARSE PARAMETER UPDATING METHOD, TRAINING NODE, DEVICE, AND STORAGE MEDIUM**

(30) Priority: 19.05.2022 CN 202210555107
(71) Applicant: Huawei Technologies Co., Ltd., Shenzhen, Guangdong 518129 (CN)
(72) Inventor: WANG, Guowei, Shenzhen, Guangdong 518129 (CN); SU, Lei, Shenzhen, Guangdong 518129 (CN); LIU, Jing, Shenzhen, Guangdong 518129 (CN)
(74) Representative: Gill Jennings & Every LLP
(86) International application number: PCT/CN2023/095266
(87) International publication number: WO 2023/222113

(57) **Abstract**

This application provides a sparse parameter update method, a training node, a device, and a storage medium, and belongs to the field of deep learning technologies. The method is applied to an artificial intelligence model training system. The system includes a first parameter node, a first training node, and a second training node. The method includes: The first training node obtains a first parameter set from the first parameter node. The first training node trains to-be-trained data by using parameters in the first parameter set, to obtain a first gradient set. The first gradient set includes a gradient that is in gradients corresponding to the parameters in the first parameter set and that is to be distributed to a second training card in the second training node. The first training node sends the first gradient set and a parameter corresponding to the gradient in the first gradient set to the second training card. The second training card updates, based on the gradient in the first gradient set, the parameter corresponding to the gradient in the first gradient set. The second training card sends an updated parameter to the first parameter node. According to the solution of this application, a transmission resource can be saved.

## Description

This application claims priority to Chinese Patent Application No. 202210555107.7, filed with the China National Intellectual Property Administration on May 19, 2022 and entitled "SPARSE PARAMETER UPDATE METHOD, TRAINING NODE, DEVICE, AND STORAGE MEDIUM", which is incorporated herein by reference in its entirety.

### TECHNICAL FIELD

This application relates to the field of deep learning technologies, and in particular, to a sparse parameter update method, a training node, a device, and a storage medium.

### BACKGROUND

In some neural network models, training data is processed into a discrete feature through one-hot (one-hot) encoding or multi-hot (multi-hot) encoding, and embedding parameters need to be used to convert an input into a continuous vector for further processing. In a separate training process, only a part of the embedding parameters participate in calculation and are updated. Such parameters are referred to as sparse parameters. A total quantity of sparse parameters reaches a level of 10 TB to 30 TB, and a memory capacity of a training card (the training card is also referred to as a training acceleration card) is insufficient to store all the sparse parameters. Therefore, the sparse parameters are generally stored in a memory of a server or a solid-state drive (solid-state drive, SSD) connected to a server.

In the conventional technology, sparse parameters are stored, in a distributed manner, in memories of a plurality of servers or SSDs connected to a plurality of servers, and training cards are deployed on the servers. A sparse parameter update process is as follows: Each training node obtains, from a memory or an SSD, training data of this time and a sparse parameter corresponding to the training data of this time. Each training node performs training based on the obtained training data to obtain a gradient of the sparse parameter corresponding to the training data. Each training node transmits, through a network, the gradient of the sparse parameter obtained through training to all other training nodes. Each training node performs gradient aggregation on the gradient of the sparse parameter stored in the training node, and updates, based on a result obtained through gradient aggregation, the sparse parameter stored in the training node.

After the training node calculates the gradient of the sparse parameter, gradients obtained by all the training nodes through calculation need to be exchanged. Therefore, a large quantity of network transmission resources are occupied.

### SUMMARY

This application provides a sparse parameter update method, a training node, a device, and a storage medium, to save a transmission resource and improve sparse parameter update efficiency.

According to a first aspect, this application provides a sparse parameter update method. The method is applied to an artificial intelligence model training system. The system includes a first parameter node, a first training node, and a second training node. The first training node includes a first training card. The second training node includes a second training card. The method includes: The first training node obtains a first parameter set from the first parameter node. The first parameter set includes a plurality of parameters. The first training node trains to-be-trained data by using the plurality of parameters, to obtain a first gradient set. The first gradient set includes a gradient that is in a plurality of gradients corresponding to the plurality of parameters in the first parameter set and that is to be distributed to the second training card. The first training node sends the first gradient set and a parameter corresponding to the gradient in the first gradient set to the second training card. The second training card updates, based on the gradient in the first gradient set, the parameter corresponding to the gradient in the first gradient set. The second training card sends an updated parameter to the first parameter node.

In the solution shown in this application, a training card is used to update a sparse parameter, so that sparse parameter update efficiency is higher, and model training efficiency can be improved. In addition, a training node segments a sparse parameter obtained by the training node, and then transmits the sparse parameter to another training card. Each sparse parameter and a corresponding gradient are transmitted to only one training card, and data does not need to be repeatedly transmitted, so that a network transmission resource can be saved.

In an example, the method further includes: The first training node obtains one second parameter set from each of N second parameter nodes. Each second parameter set includes a plurality of parameters. That the first training node trains to-be-trained data by using the plurality of parameters, to obtain a first gradient set includes: A plurality of training cards in the first training node train the to-be-trained data by using the first parameter set and parameters in obtained N second parameter sets. The plurality of training cards include the first training card. The first training card aggregates gradient data obtained after the plurality of training cards complete training. The first training card segments aggregated gradient data based on a parameter node, to obtain the first gradient set corresponding to the first parameter node, or the first training card segments aggregated gradient data based on a training node, to obtain the first gradient set corresponding to the second training node. The first gradient set corresponding to the second training node further includes a gradient that is in a plurality of gradients corresponding to the plurality of parameters in the N second parameter sets and that is to be distributed to the second training card.

In the solution shown in this application, the first training card in the first training node obtains all parameters of the first training node and corresponding gradients. Then, the first training card segments the gradients based on the parameter node or the training node, and distributes the gradients to corresponding training cards, so that the training cards update the parameters. In this way, the training card is used to calculate the gradient corresponding to the sparse parameter and update the sparse parameter, so that the sparse parameter update efficiency is higher.

In an example, the method further includes: The first training node obtains one second parameter set from each of N second parameter nodes. Each second parameter set includes a plurality of parameters. That the first training node trains to-be-trained data by using the plurality of parameters, to obtain a first gradient set includes: A plurality of training cards in the first training node train the to-be-trained data by using the first parameter set and parameters in obtained N second parameter sets. The plurality of training cards include the first training card. The first training card segments, based on each training card in the system, gradient data obtained after the first training card completes training, to obtain the first gradient set corresponding to the second training card. The first gradient set further includes a gradient that is in the gradient data obtained after the first training card completes training, that corresponds to a parameter in the N second parameter sets, and that is to be distributed to the second training card.

In the solution shown in this application, the training cards in the first training node calculate gradients in parallel, and segment the gradients in parallel, so that the parameters can be updated in parallel, thereby improving training efficiency.

In an example, the method further includes: The first training node obtains one second parameter set from each of N second parameter nodes. Each second parameter set includes a plurality of parameters. That the first training node trains to-be-trained data by using the plurality of parameters, to obtain a first gradient set includes: A plurality of training cards in the first training node train the to-be-trained data by using the first parameter set and parameters in obtained N second parameter sets. The plurality of training cards include the first training card. The first training card segments, based on a parameter node, gradient data obtained after the first training card completes training, to obtain the first gradient set corresponding to the second training card.

In the solution shown in this application, a mapping relationship is established between a parameter node and a training card. The training cards in the first training node calculate gradients in parallel, and segment the gradients in parallel based on the parameter nodes, so that parameters distributed to a same training card belong to a same parameter node, and the training cards can send updated parameters to the corresponding parameter nodes together for update.

In an example, that the second training card updates, based on the gradient in the first gradient set, the parameter corresponding to the gradient in the first gradient set includes: The second training card aggregates gradients in a plurality of gradient sets received from a plurality of training nodes in the system, where the plurality of gradient sets include the first gradient set; and updates, by using an aggregated gradient, the parameter corresponding to the gradient in the first gradient set.

In the solution shown in this application, the aggregated gradient is used to update the parameter, so that the updated parameter can be more accurate.

In an example, that the first training card segments aggregated gradient data based on a parameter node, to obtain the first gradient set corresponding to the first parameter node includes: determining an index value based on a feature of a parameter corresponding to each piece of aggregated gradient data, where one index value indicates one parameter node; and classifying a gradient corresponding to a parameter having a first index value into the first gradient set, where the first index value indicates the first parameter node.

According to a second aspect, this application provides a first training node. The first training node has a function of implementing a step performed by the first training node in the first aspect.

According to a third aspect, this application provides a computer device. The computer device includes a processor and a memory. The memory stores computer instructions. The processor is configured to execute the computer instructions, to enable the computer device to perform a part of the sparse parameter update method provided in any one of the first aspect or the optional manners of the first aspect.

According to a fourth aspect, this application provides a computer-readable storage medium. The storage medium stores at least one computer instruction. The computer instruction is read by a processor, to enable a computer device to perform a part of the sparse parameter update method performed by the training node according to any one of the first aspect or the optional manners of the first aspect.

According to a fifth aspect, this application provides a computer program product. The computer program product includes computer instructions. The computer instructions are stored in a computer-readable storage medium. A processor of a computer device reads the computer instructions from the computer-readable storage medium. The processor executes the computer instructions, to enable the computer device to perform a part of the sparse parameter update method performed by the training node according to any one of the first aspect or the optional manners of the first aspect.

### BRIEF DESCRIPTION OF DRAWINGS

FIG. 1 is a schematic diagram of a system architecture according to an example embodiment of this application;
FIG. 2 is a schematic diagram of a system architecture according to an example embodiment of this application;
FIG. 3 is a schematic diagram of a hardware structure of a device according to an example embodiment of this application;
FIG. 4 is a schematic flowchart of a sparse parameter update method according to an example embodiment of this application;
FIG. 5 is a schematic flowchart of a sparse parameter update method according to an example embodiment of this application;
FIG. 6 is a schematic diagram of an example of updating a sparse parameter according to an example embodiment of this application;
FIG. 7 is a schematic flowchart of a sparse parameter update method according to an example embodiment of this application; and
FIG. 8 is a schematic diagram of an example of updating a sparse parameter according to an example embodiment of this application.

### DESCRIPTION OF EMBODIMENTS

To make the objectives, technical solutions, and advantages of this application clearer, the following further describes implementations of this application in detail with reference to the accompanying drawings.

The following explains and describes some terms and concepts in embodiments of this application.
1. An artificial neural network (artificial neural network, ANN) model is a mathematical model or a computing model that simulates a structure and a function of a biological neural network (for example, a central nervous system of an animal, where the central nervous system may be a brain and the like) in the field of machine learning and cognitive science, and is used to estimate or approximate a function. An artificial neural network performs computation through connection of a large quantity of artificial neurons. The artificial neural network may also be referred to as a neural network (neural network, NN) model or a neural network-like model for short.
2. An embedding (embedding) layer is a layer that converts a feature of an input layer into a vector of a fixed dimension in the neural network model.
3. A parameter (parameter) is a parameter in the neural network model, and is specifically a weight matrix W and a bias vector b of each neural network unit. When an architecture of the neural network model is fixed, a process of training the neural network model is a process of continuously adjusting a value of the parameter to achieve optimal performance of the neural network model.
4. A sparse parameter is a type of parameter in the neural network model. A feature of the sparse parameter is that only a part of sparse parameters are activated during each round of training. "Activated" means participating in forward computation and reverse update. For example, in a neural network model such as a recommendation system or natural language processing, an input is processed into a discrete feature through one-hot encoding or multi-hot encoding, and embedding parameters need to be used in an embedding layer to convert the input into a continuous vector for further processing. In a separate training process, only a part of embedding parameters participate in calculation and is updated. Such parameters are referred to as sparse parameters.

The following describes a background of embodiments of this application.

A data amount of a sparse parameter is large, and a memory capacity of a training card is insufficient to store all sparse parameters. Therefore, the sparse parameters are generally stored in a memory of a server or an SSD connected to a server. When the sparse parameters are updated, there are the following characteristics: 1. The data amount is huge. For example, sparse parameters in a recommendation model can reach a magnitude of 10¹² to 10¹⁴, and consume storage space at a level of 10 TB to 30 TB, and complete training cannot be performed in the training card. 2. The parameters are sparse. In other words, only a small part of all the sparse parameters are used for each training course. For example, when a mini-batch includes 10000 samples, each of which has 1000 sample features, 10⁷ sparse parameters are used. 3. A training process involves a large amount of calculation and data transmission, and consequently, computing resources and network resources easily form a bottleneck.

In consideration of these problems that exist during sparse parameter update, in this application, a sparse parameter update process is optimized, so that a data transmission amount is reduced. Therefore, single-round training time can be reduced, and total model training time can be finally optimized.

The following specifically describes the technical solutions provided in embodiments of this application from a plurality of perspectives in a sequence of a system architecture, a hardware structure of a device in the system architecture, and a sparse parameter update method.

The following describes the system architecture in embodiments of this application.

An embodiment of this application provides an architecture of an artificial intelligence model training system, which is referred to as a system architecture 100 for short. The system architecture 100 is an example of a system architecture for updating a sparse parameter. The system architecture 100 includes a parameter node 101 and a training node 102. The parameter node 101 is configured to store a parameter and the like. The training node 102 is configured to update a parameter. The training node 102 may be referred to as a worker node (worker).

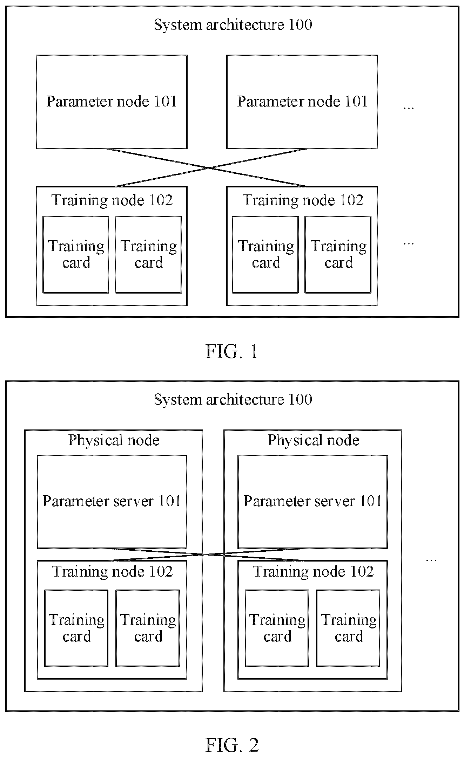

In an example, the parameter node 101 and the training node 102 are separately deployed on different physical nodes. The parameter node 101 is connected to the training node 102 through a wireless network or a wired network. Quantities and types of parameter nodes 101 and training nodes 102 are not limited in embodiments of this application. For example, refer to FIG. 1. The system architecture 100 includes N parameter nodes 101 and M training nodes 102. Both N and M are integers. N and M may be the same or different. At least one training card is deployed on each training node 102. That is, each training node 102 includes at least one training card. The training card may be a neural network processing unit (neural network processing unit, NPU) or a graphics processing unit (graphics processing unit, GPU). Quantities of training cards deployed on different training nodes 102 may be the same or different. When the parameter node 101 and the training node 102 are separately deployed on different physical nodes, the parameter node 101 may also be referred to as a parameter server.

In another example, one parameter node 101 and one training node 102 are deployed on a same physical node. As shown in FIG. 2, the parameter node 101 is connected to the training node 102 through a bus inside the physical node.

In another example, some parameter nodes 101 and some training nodes 102 are deployed on same physical nodes, and one parameter node 101 and one training node 102 are deployed on one physical node. Some parameter nodes 101 and some training nodes 102 are separately deployed on different physical nodes.

In the three examples, any two training nodes 102 are connected to each other through a wireless network or a wired network. Training cards in different training nodes 102 are optionally connected to each other through an inter-card transmission network. In other words, the training cards in the different training nodes 102 may directly communicate with each other.

The following describes a hardware structure of a device in the system architecture 100.

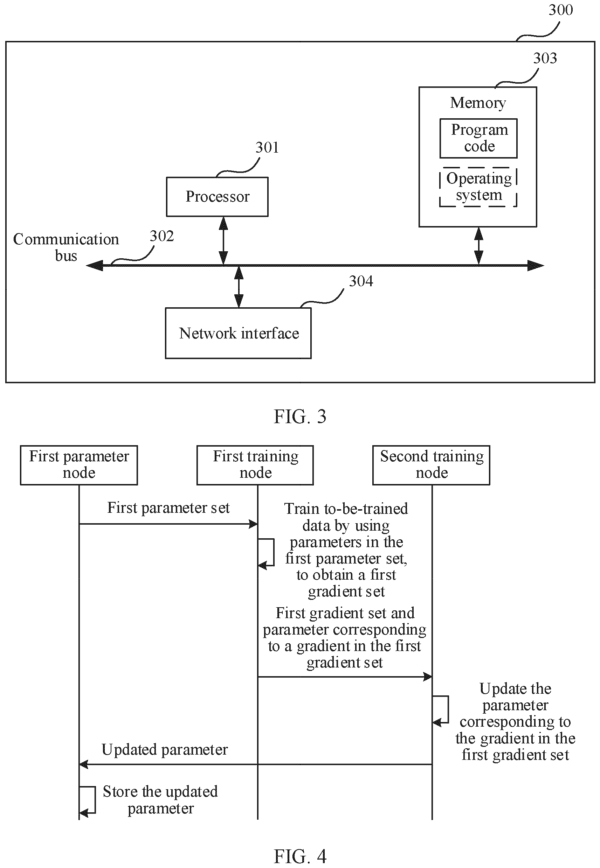

A device 300 shown in FIG. 3 is used as an example of the hardware structure of the device in the system architecture 100 for description. Optionally, the device 300 is configured as the parameter node 101, the training node 102, or the physical node. The device 300 is, for example, a host or a server.

The device 300 is optionally implemented by using a general bus architecture. The device 300 includes at least one processor 301, a communication bus 302, a memory 303, and at least one network interface 304.

The processor 301 is, for example, a general-purpose central processing unit (central processing unit, CPU), a network processor (network processor, NP), a GPU, an NPU, a data processing unit (data processing unit, DPU), a microprocessor, or one or more integrated circuits configured to implement the solutions of this application. For example, the processor 301 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), a generic array logic (generic array logic, GAL), or any combination thereof.

The communication bus 302 is configured to transmit information between the foregoing components. The communication bus 302 may be classified into an address bus, a data bus, a control bus, and the like. For ease of representation, only one thick line is used to represent the bus in FIG. 3, but this does not mean that there is only one bus or only one type of bus.

The memory 303 is, for example, a read-only memory (read-only memory, ROM) or another type of static storage device capable of storing static information and instructions; is, for example, a random access memory (random access memory, RAM) or another type of dynamic storage device capable of storing information and instructions; or is, for example, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of an instruction or a data structure and accessible by a computer, but is not limited thereto. For example, the memory 303 exists independently, and is connected to the processor 301 through the communication bus 302. The memory 303 may alternatively be integrated with the processor 301.

Optionally, the memory 303 is configured to store data obtained by the device 300 in a sparse parameter update process, and the like.

The network interface 304 is any apparatus such as a transceiver, and is configured to communicate with another device or a communication network. The network interface 304 includes a wired network interface, and may further include a wireless network interface. The wired network interface may be, for example, an Ethernet interface. The Ethernet interface may be an optical interface, an electrical interface, or a combination thereof. The wireless network interface may be a wireless local area network (wireless local area network, WLAN) interface, a cellular network interface, a combination thereof, or the like.

During specific implementation, in an embodiment, the processor 301 may include one or more CPUs.

During specific implementation, in an embodiment, the device 300 may include a plurality of processors. Each of the processors may be a single-core processor, or may be a multicore processor. The processor herein may be one or more devices, circuits, and/or processing cores configured to process data (for example, computer program instructions).

In some embodiments, the memory 303 is configured to store program code for executing the solutions of this application, and the processor 301 may execute the program code stored in the memory 303. That is, the device 300 may implement, through the processor 301 and the program code in the memory 303, the sparse parameter update method provided in a method embodiment.

Before the sparse parameter update method is described, a related concept of sparse parameter storage is first described.

Sparse parameters are stored, in a distributed manner, in memories of a plurality of parameter nodes 101 or SSDs connected to a plurality of parameter nodes 101. Each sparse parameter corresponds to a feature. The feature of each sparse parameter may also be referred to as an index. For any sparse parameter, a parameter node 101 storing the sparse parameter and the sparse parameter may be positioned based on a feature of the sparse parameter.

The following describes a procedure of the sparse parameter update method. The method is applied to an artificial intelligence model training system. The system includes a first parameter node, a first training node, and a second training node. Herein, the system includes only one parameter node and two training nodes. During actual application, the system may include a plurality of parameter nodes and a plurality of training nodes. The first parameter node is configured to store a sparse parameter. The first training node and the second training node are configured to update the sparse parameter. The first training node includes a first training card. The second training node includes a second training card.

Specifically, the first training node obtains a sparse parameter from each parameter node. The first training node trains to-be-trained data by using the obtained sparse parameter, to obtain a gradient corresponding to the obtained sparse parameter. Then, the first training node determines a gradient to be distributed to each training card in the system. The first training node sends the gradient and a corresponding sparse parameter to the corresponding training card. The training card updates the received sparse parameter by using the received gradient. Then, the training card sends an updated sparse parameter to a corresponding parameter node based on a feature of the sparse parameter.

For example, refer to FIG. 4. The first training node obtains a first parameter set from the first parameter node. The first parameter set includes a plurality of parameters. The plurality of parameters are all sparse parameters. The first training node trains to-be-trained data by using the plurality of parameters, to obtain a first gradient set. The first gradient set includes a gradient that is in a plurality of gradients corresponding to the plurality of parameters and that is to be distributed to the second training card. The first training node sends, to the second training card, the first gradient set and a parameter corresponding to the gradient in the first gradient set. The second training card updates, by using the gradient in the first gradient set, the parameter corresponding to the gradient in the first gradient set, to obtain an updated parameter. The first training card sends the updated parameter to the first parameter node. The first parameter node replaces the parameter before update with the updated parameter.

Refer to a procedure shown in FIG. 4. In the solution of this application, a training card is used to update a sparse parameter, so that sparse parameter update efficiency is higher. In addition, a training node segments a sparse parameter obtained by the training node, and then transmits the sparse parameter to another training card. Each sparse parameter and a corresponding gradient are transmitted to only one training card, and data does not need to be repeatedly transmitted, so that a network transmission resource can be saved.

It should be noted that FIG. 4 is described with the first training node and the second training node as an example. For a sparse parameter update process performed by another training node, refer to FIG. 4. Details are not described herein again. In addition, in the procedure shown in FIG. 4, only one sparse parameter update process is shown. For each sparse parameter update process, refer to the procedure shown in FIG. 4.

In the procedure shown in FIG. 4, the first training card may be a primary training card in the first training node, or may be any training card in the first training node. The second training card may be a primary training card in the second training node, or may be any training card in the second training node. The primary training card is a training card that is in the training node to which the primary training card belongs and that is configured to update the sparse parameter. The following describes the sparse parameter update process in the two cases respectively.

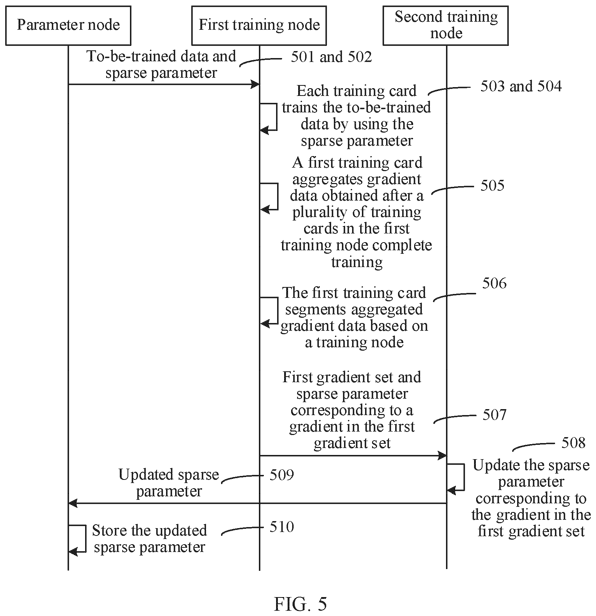

In a first case, the first training node includes the first training card and a third training card. Both the first training card and the third training card are training cards that participate in training. The first training card is a primary training card in the first training node. There are one or more third training cards. A partial training model runs on each training card that participates in training in the first training node, and partial training models running on all training cards that participate in training form a complete training model. After trained, the complete training model may be used for inference. For example, the complete training model may be a recommendation model or a natural language processing model. A specific structure of the model is not limited in this embodiment of this application. Similarly, the second training node includes the second training card and a fourth training card. Both the second training card and the fourth training card are training cards that participate in training. The second training card is a primary training card in the second training node. There are one or more fourth training cards. A partial training model runs on each training card that participates in training in the second training node, and partial training models running on all training cards that participate in training form a complete training model. The complete training model is the same as the training model on the first training node. For a sparse parameter update procedure, refer to step 501 to step 510 in FIG. 5.

Step 501: The first training node obtains to-be-trained data in a current round of training.

In this embodiment, the to-be-trained data may be stored on a parameter node in a distributed manner, or may be stored on another server. The to-be-trained data may also be referred to as training data. The first training node obtains the to-be-trained data, referred to as batch (batch) data, in the current round of training on the first training node. The batch data is a sum of to-be-trained data used by the training cards that participate in training in the first training node. An amount of to-be-trained data in each round may be preset. In the procedure shown in FIG. 5, an example in which the to-be-trained data is stored on the parameter node is used for description.

Step 502: The first training node calculates a feature of a sparse parameter required by the to-be-trained data, and obtains the sparse parameter from a corresponding parameter node based on the feature of the sparse parameter.

The sparse parameter required by the to-be-trained data is a parameter for converting the to-be-trained data into a vector of a fixed dimension.

In this embodiment, a processor (for example, a CPU) of the first training node calculates the feature of the sparse parameter required by the batch data. The corresponding parameter node is found based on the feature of the sparse parameter, and the sparse parameter is obtained from the parameter node.

In step 502, a system architecture includes a first parameter node and N second parameter nodes. N is an integer greater than or equal to 1. A sparse parameter obtained by the first training node from the first parameter node forms a first parameter set. A sparse parameter obtained by the first training node from each of the N second parameter nodes forms a second parameter set. In this way, the first training node obtains one first parameter set and N second parameter sets.

In an example, different to-be-trained data may correspond to a same sparse parameter. Therefore, the sparse parameter may be first deduplicated and then obtained from the parameter node. In this way, a transmission resource can be saved.

Step 503: The first training node transmits the to-be-trained data, the sparse parameter, and the feature of the sparse parameter to each training card in the first training node.

In this embodiment, the processor (for example, the CPU) of the first training node broadcasts the batch data, the sparse parameter, and the feature of the sparse parameter to each training card in the first training node. Alternatively, the first training node transmits the batch data, the sparse parameter, and the feature of the sparse parameter to each training card through a scatter (scatter) operation and an all reduce (all reduce) operation. Herein, the training cards are training cards that participate in training in the first training node.

Herein, processing of transmitting the batch data, the sparse parameter, and the feature of the sparse parameter to each training card through the scatter operation and the all reduce operation is as follows: If a quantity of training cards in the first training node is P, the first training node divides the batch data, the sparse parameter, and the feature of the sparse parameter into P parts, and sends one part of the batch data, one part of the sparse parameter, and one part of the feature of the sparse parameter to one training card. Different training cards obtain different data. Then, each training card obtains all of the batch data, the sparse parameter, and the feature of the sparse parameter through the all reduce operation.

Step 504: Each training card in the first training node trains, by using corresponding to-be-trained data, a sparse parameter corresponding to the to-be-trained data, to obtain a gradient corresponding to the sparse parameter.

In this embodiment, each training card in the first training node obtains mini-batch (mini-batch) data corresponding to the training card in the batch data, and then trains, by using the mini-batch data, a sparse parameter corresponding to the mini-batch data, to obtain a gradient corresponding to the sparse parameter.

Mini-batch data corresponding to different training cards are not completely the same, which may be partially the same or completely different.

Step 505: The first training card aggregates gradient data obtained after a plurality of training cards in the first training node complete training.

In this embodiment, the first training card obtains a sparse parameter and a corresponding gradient on the third training card. The third training card is a training card that participates in training in the first training node other than the first training card. For example, the third training card performs training to obtain the gradient corresponding to the sparse parameter of the third training card, and the third training card sends the gradient corresponding to the sparse parameter, a feature of the sparse parameter, and the sparse parameter to the first training card. For another example, an all reduce sum (all reduce sum) operation is performed between the first training card and the third training card, so that the first training card obtains a feature of the sparse parameter, the sparse parameter, and the corresponding gradient on the third training card. Herein, the first training card may obtain, through the all reduce sum operation, a sum of gradients corresponding to sparse parameters on all training cards that participate in training in the first training node. In this way, after the all reduce sum operation is performed, gradients corresponding to a same sparse parameter on the first training node are added, so that an amount of data transmitted by the first training card to a primary training card in another training node is reduced.

Step 506: The first training card segments aggregated gradient data based on a training node.

In this embodiment, the first training card determines a training node that participates in training in the system architecture, and determines, by using a feature of a sparse parameter corresponding to the aggregated gradient data, a training node to which each sparse parameter is to be distributed. Because there is one-to-one correspondence between a gradient and a sparse parameter, if the training node to which the sparse parameter is to be distributed is determined, a training node to which the gradient corresponding to the sparse parameter is to be distributed is determined.

In an example, the first training card calculates a hash value of a feature of each sparse parameter. The first training card determines, by using the hash value of the feature of each sparse parameter, the training node to which each sparse parameter is to be distributed. For example, each training node corresponds to an index, and a hash value of the index of each training node is determined. For any sparse parameter, a hash value of a feature of the sparse parameter is determined, a training node whose hash value is closest to the hash value of the feature of the sparse parameter is selected from the training nodes, and the selected training node is determined as a training node to which the sparse parameter is to be distributed. Because each training node has only one primary training card, determining the training node means determining the primary training card.

In the procedure shown in FIG. 5, it is determined, in the foregoing manner, that a gradient set formed by a gradient to be distributed to the primary training card (that is, the second training card) in the second training node is the first gradient set. The first gradient set includes a gradient that is in a plurality of gradients corresponding to a plurality of sparse parameters in the first parameter set and that is to be distributed to the second training card and a gradient that is in a plurality of gradients corresponding to a plurality of sparse parameters in the N second parameter sets and that is to be distributed to the second training card.

Step 507: The first training node sends the first gradient set and a sparse parameter corresponding to the gradient in the first gradient set to the second training card.

In this embodiment, when there is no inter-card transmission network between the first training card and the second training card, the first training node transmits the first gradient set and the sparse parameter corresponding to the gradient in the first gradient set to the second training node through a network between the first training node and the second training node. Then, the second training node delivers the received sparse parameter and the corresponding gradient to the primary training card.

When there is an inter-card transmission network between the first training card and the second training card, the first gradient set and the sparse parameter corresponding to the gradient in the first gradient set are directly distributed to the second training card through the inter-card transmission network.

In an example, the first training card may further send a feature of the sparse parameter to the second training card. In this way, the feature of the sparse parameter may be subsequently used to update an updated sparse parameter to the parameter node.

When the first training card does not send the feature of the sparse parameter to the second training card, the second training card may find the feature of the sparse parameter through table lookup by using the sparse parameter.

Step 508: The second training card updates, by using the gradient in the first gradient set, the sparse parameter corresponding to the gradient in the first gradient set.

In this embodiment, after adding all gradients corresponding to any sparse parameter, the second training card calculates an average value, and determines the calculated average value as a gradient aggregation result corresponding to the any sparse parameter. The second training card iteratively adjusts the sparse parameter in an inverse direction of the gradient by using a gradient descent method based on the gradient aggregation result corresponding to the any sparse parameter, to obtain an updated sparse parameter corresponding to the any sparse parameter.

Step 509: The second training card sends an updated sparse parameter to the corresponding parameter node.

In this embodiment, the second training card determines an index value by using the feature of the sparse parameter. The second training card finds the corresponding parameter node by using the index value, and sends the updated sparse parameter to the corresponding parameter node.

Step 510: The parameter node stores the received sparse parameter.

In the procedure shown in FIG. 5, the same as the first training node, the second training card in the second training node also sends, to the first training card, a sparse parameter and a gradient that are to be distributed to the first training card and that are in the second training node, and the second training card obtains sparse parameters and corresponding gradients on all training cards (the second training card and the fourth training card) in the second training node. The first training node receives the sparse parameter and the corresponding gradient that are sent by the second training card to the first training card. The first training card aggregates gradients corresponding to current sparse parameters on the first training card, to obtain a gradient aggregation result corresponding to the current sparse parameters, and updates the current sparse parameters based on the gradient aggregation result. The current sparse parameters include a sparse parameter distributed by the first training card to the first training card and the sparse parameter received from the second training card.

In this embodiment, when there is no inter-card transmission network between the first training card and the second training card, the first training node receives, through the network between the first training node and the second training node, the sparse parameter and the corresponding gradient that are sent by the second training card in the second training node to the first training card. Then, the first training node delivers the received sparse parameter and the corresponding gradient to the first training card.

When there is the inter-card transmission network between the first training card and the second training card, the first training card receives, through the inter-card transmission network, the sparse parameter and the corresponding gradient that are sent by the second training card to the first training card.

After the first training card obtains the sparse parameter and the corresponding gradient that are sent by the second training card to the first training card, the current sparse parameters on the first training card include the sparse parameter distributed by the first training card to the first training card and the sparse parameter received from the second training card.

For any sparse parameter in the current sparse parameters, the first training card aggregates gradients corresponding to the any sparse parameter to obtain a gradient aggregation result corresponding to the any sparse parameter, and updates the any sparse parameter by using the gradient aggregation result corresponding to the any sparse parameter, to obtain an updated sparse parameter corresponding to the any sparse parameter.

The first training card determines an index value by using a feature of the sparse parameter. The first training card finds a corresponding parameter node by using the index value, and updates the updated sparse parameter to the corresponding parameter node.

In an example, the second training card further sends the feature of the sparse parameter to the first training card. The first training card may further receive the feature that is of the sparse parameter and that is sent by the second training card. In this way, the feature of the sparse parameter may be subsequently used to update an updated sparse parameter to the parameter node.

When the second training card does not send the feature of the sparse parameter to the first training card, the first training card may find the feature of the sparse parameter through table lookup by using the sparse parameter.

In the procedure shown in FIG. 5, it should be noted that when a parameter node and a training node are deployed on a same physical node, to reduce a data transmission amount between physical nodes, a sparse parameter is distributed to a primary training card of the physical node in which the sparse parameter is stored. An index of the training node is an index of the physical node to which the training node belongs. In this way, after the primary training card updates the sparse parameter, an updated sparse parameter is directly stored in a corresponding parameter node through an internal high-speed serial computer extension bus standard (peripheral component interconnect express, PCIe) bus, and does not need to be transmitted through a network between the physical nodes.

When a parameter node and a training node are not deployed on a same physical node, a training node to which a sparse parameter is to be distributed is determined based on an index of the training node and a feature of the sparse parameter. After a primary training card updates the sparse parameter, the training node stores an updated sparse parameter to a corresponding parameter node through a network between the training node and the parameter node.

In the procedure shown in FIG. 5, gradient segmentation is performed based on a training node. In another example, in step 506, segmentation may also be performed based on a parameter node, to ensure that sparse parameters stored in a same parameter node are stored and segmented to a same training node. For example, a mapping relationship between a parameter node and a training node may be prestored. The primary training card determines an index value by using a feature of a sparse parameter. Different index values correspond to different parameter nodes. One index value corresponds to only one parameter node. One index value may correspond to one parameter node. Then, a training node corresponding to the parameter node may be determined based on the mapping relationship. In this way, in the procedure shown in FIG. 5, it may be considered that a gradient corresponding to a sparse parameter having a first index value is classified into the first gradient set, and the first index value corresponds to a specific parameter node.

With this solution, after updating the sparse parameter, the primary training card may determine the corresponding parameter node by using a feature of one sparse parameter, and does not need to determine the corresponding parameter node by using a feature of each sparse parameter.

For better understanding of the procedure shown in FIG. 5, the following uses an example in which one parameter node and one training node are deployed on a same physical node for description.

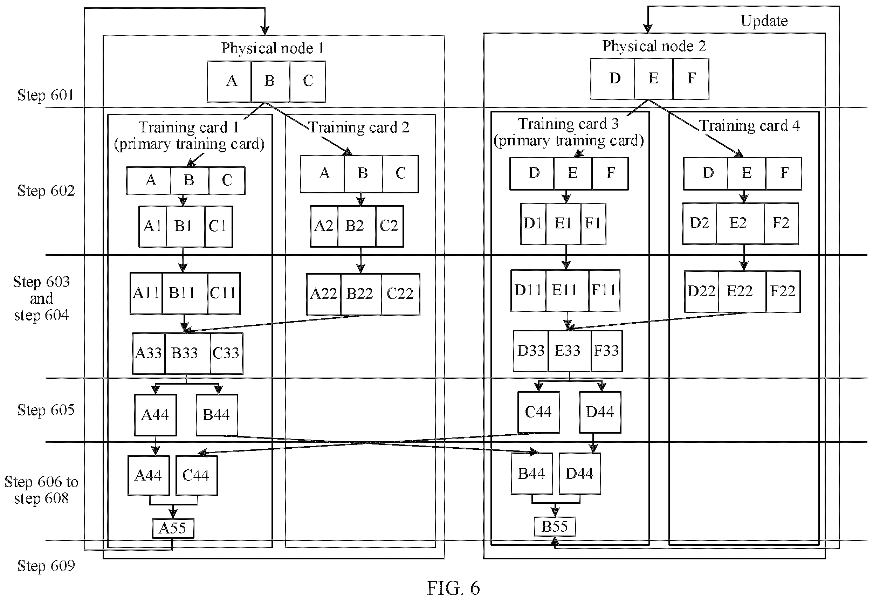

Refer to FIG. 6. The system architecture 100 includes two physical nodes. The two physical nodes are a physical node 1 and a physical node 2. Two training cards are inserted into each physical node. The two training cards in the physical node 1 are a training card 1 and a training card 2. The training card 1 is a primary training card. The two training cards in the physical node 2 are a training card 3 and a training card 4. The training card 3 is a primary training card. The training card may be an NPU.

Step 601: A training node in the physical node 1 obtains to-be-trained data in a current round of training, which is referred to as batch data. A CPU of the physical node 1 calculates a feature of a sparse parameter required by the batch data, and obtains the sparse parameter from a corresponding parameter node based on the feature of the sparse parameter.

The sparse parameter is represented as W1, and is a part of a full sparse parameter. It is assumed that W1 includes three subsets A, B, and C.

Step 602: The physical node 1 transmits the batch data, W1, and the feature of W1 to the two training cards through a scatter operation and an all reduce operation.

Step 603: The two training cards in the physical node 1 separately train, by using corresponding mini-batch data, sparse parameters corresponding to the mini-batch data, to obtain gradients corresponding to the sparse parameters. The sparse parameters corresponding to the mini-batch data of the training card 1 are represented as subsets A1, B1, and C1, and the obtained gradients are represented as A11, B11, and C11. The sparse parameters corresponding to the mini-batch data of the training card 2 are represented as subsets A2, B2, and C2, and the obtained gradients are represented as A22, B22, and C22.

Step 604: The primary training card (the training card 1) in the physical node 1 obtains the sparse parameters and the corresponding gradients in the training card 2 in the physical node 1. Sparse parameters and corresponding gradients in the current physical node 1 are represented as subsets A33, B33, and C33. Each subset includes a plurality of sparse parameters and corresponding gradients.

Step 605: The primary training card in the physical node 1 determines slices A44 and B44 based on features of the sparse parameters and an index of the training node. Primary training cards respectively corresponding to the slices A44 and B44 are the primary training card in the physical node 1 and the primary training card in the physical node 2.

Step 606: The primary training card in the physical node 1 sends the slice B44 and a feature of a sparse parameter in the slice B44 to the primary training card in the physical node 2.

Step 607: The primary training card in the physical node 1 receives a slice C44 and a feature of a sparse parameter in the slice C44 that are sent by the primary training card in the physical node 2.

Step 608: The primary training card in the physical node 1 aggregates gradients in A44 and C44 to obtain a gradient aggregation result A55, and updates sparse parameters in A44 and C44 based on the gradient aggregation result A55.

Step 609: The primary training card in the physical node 1 updates updated sparse parameters to a corresponding parameter node.

In FIG. 6, processing of the physical node 2 is similar to that of the physical node 1. Sparse parameters obtained by the physical node 2 are represented as W2, and includes three subsets D, E, and F. Sparse parameters corresponding to mini-batch data of the training card 3 are represented as subsets D1, E1, and F1, and obtained gradients are represented as subsets D11, E11, and F11. Sparse parameters corresponding to mini-batch data of the training card 4 are represented as subsets D2, E2, and F2, and obtained gradients are represented as subsets D22, F22, and E22. The sparse parameters on the training card 3 and the training card 4 in the physical node 2 and the corresponding gradients are merged and then represented as subsets D33, F33, and E33. Each subset includes a plurality of sparse parameters and corresponding gradients. The training card 3 divides the subsets D33, F33, and E33 into slices C44 and D44 based on features of the sparse parameters in the subsets D33, F33, and E33. The training card 3 sends C44 and a feature of a sparse parameter in C44 to the training card 1 in the physical node 1. The training card 3 in the physical node 2 aggregates gradients in B44 and D44 to obtain a gradient aggregation result B55, and updates the sparse parameters based on the gradient aggregation result B55.

In the solution shown in FIG. 5, a training card is used for gradient aggregation and parameter update. Compared with a conventional manner in which a parameter node performs parameter update, this manner reduces memory occupation of CPU and physical node, so that gradient aggregation and parameter update efficiency is higher. In addition, when there is an inter-card transmission network, dependence of data transmission on a host network can be reduced, and a bottleneck of the host network can be alleviated.

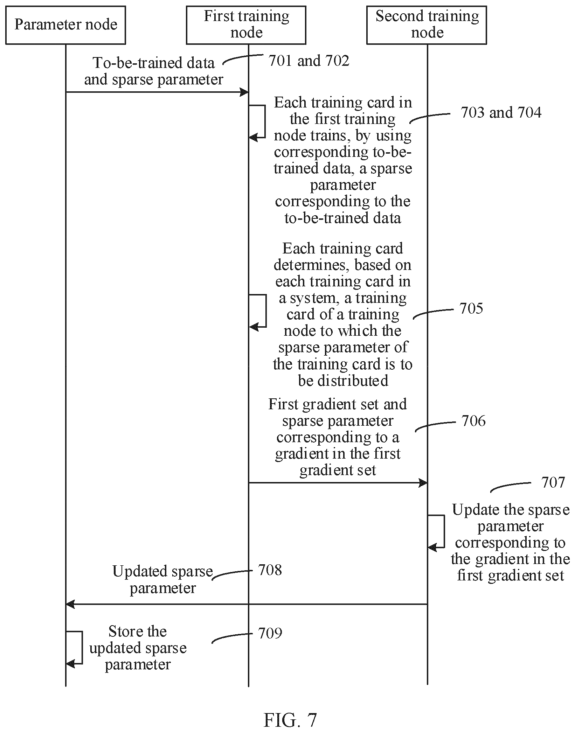

In a second case, a complete training model is deployed on each training card that participates in training in the first training node and the second training node. For a sparse parameter update procedure, refer to step 701 to step 709 in FIG. 7. In FIG. 7, interaction between the first training node and the second training node that are included in the system is used as an example for description.

Step 701: The first training node obtains to-be-trained data in a current round of training on each training card.

In this embodiment, the to-be-trained data may be stored on a parameter node in a distributed manner, or may be stored on another server. The to-be-trained data may also be referred to as training data. The first training node obtains the to-be-trained data in the current round of training on each training card. The to-be-trained data in the current round of training on each training card is referred to as mini-batch data. An amount of to-be-trained data in each round of training may be preset.

Step 702: The first training node calculates a feature of a sparse parameter required by the to-be-trained data in the current round of training on each training card, and obtains the sparse parameter from a corresponding parameter node based on the feature of the sparse parameter.

In this embodiment, a processor (for example, a CPU) of the first training node calculates the feature of the required sparse parameter. The corresponding parameter node is found based on the feature of the sparse parameter, and the sparse parameter is obtained from the parameter node.

In an example, to-be-trained data of each training card may correspond to a same sparse parameter. Therefore, the sparse parameter may be first deduplicated and then obtained from the parameter node. In this way, a transmission resource can be saved.

Step 703: The first training node transmits, to each training card, the to-be-trained data, the sparse parameter, and the feature of the sparse parameter that are of the training card.

In this embodiment, the processor of the first training node transmits, to each training card, the to-be-trained data, the sparse parameter, and the feature of the sparse parameter that are of the training card.

Step 704: Each training card in the first training node trains, by using the corresponding to-be-trained data, the sparse parameter corresponding to the to-be-trained data, to obtain a gradient of the sparse parameter corresponding to the to-be-trained data.

Step 705: Each training card in the first training node determines, based on each training card in the system, a training card of a training node to which the sparse parameter of the training card is to be distributed.

In this embodiment, each training card in the first training node determines a training card in each training node, and determines, by using a hash value of the feature of the sparse parameter of the training card, a training card in a training node to which the sparse parameter of the training card is to be distributed.

In an example, for any training card in the first training node, the training card determines a hash value of a feature of a sparse parameter of the training card. A training card in each training node corresponds to an index, and a hash value of an index of each training card is determined. For any sparse parameter, a training node whose hash value is closest to a hash value of a feature of the sparse parameter is selected from the training cards, and the selected training card is determined as a training card to which the sparse parameter is to be distributed.

In the procedure shown in FIG. 7, it is determined, in the foregoing manner, that a gradient set formed by the gradient to be distributed to the second training card in the second training node is the first gradient set. The first gradient set includes a gradient that is in a plurality of gradients corresponding to a plurality of sparse parameters in the first parameter set and that is to be distributed to the second training card and a gradient that is in gradient data obtained after the first training card completes training, that corresponds to a sparse parameter in N second parameter sets and that is to be distributed to the second training card.

Step 706: Each training card in the first training node distributes the sparse parameter of the training card and a corresponding gradient to the training card in the corresponding training node.

In this embodiment, sending to the second training card is used as an example for description in FIG. 7. When there is no inter-card transmission network between each training card in the first training node and the second training card, the first training node transmits the sparse parameter and the corresponding gradient to the second training node through a network between the first training node and the second training node. Then, the second training node delivers the received sparse parameter and the corresponding gradient to the second training card. In this case, when the sparse parameter and the corresponding gradient are sent, an identifier of the training card is further sent, to indicate the training card to which the sparse parameter and the corresponding gradient are to be sent.

When there is an inter-card transmission network between each training card in the first training node and the second training card, the sparse parameter and the corresponding gradient are distributed to the second training card through the inter-card transmission network.

In step 706, a gradient and a sparse parameter may be transmitted between training cards in a same training node. In this case, a bus may be used for transmission.

In an example, each training card may further send the feature of the sparse parameter to the second training card. In this way, the feature of the sparse parameter may be subsequently used to update an updated sparse parameter to the parameter node.

When each training card does not send the feature of the sparse parameter to the second training card, the second training card may find the feature of the sparse parameter through table lookup by using the sparse parameter.

Step 707: The second training card updates, by using the gradient in the first gradient set, a sparse parameter corresponding to the gradient in the first gradient set.

Step 708: The second training card sends an updated sparse parameter to the corresponding parameter node.

For detailed descriptions of step 707 and step 708, refer to the procedure shown in FIG. 5. Details are not described herein again.

Step 709: The parameter node stores the received sparse parameter.

In the procedure shown in FIG. 7, each training card in the first training node receives a sparse parameter and a corresponding gradient that are sent by another training card to the training card. For the first training card, the another training card includes a training card other than the first training card in the first training node and a training card in another training node. The another training card includes the second training card. Each training card in the first training node aggregates gradients corresponding to a current sparse parameter of the training card to obtain a gradient aggregation result corresponding to the current sparse parameter, and updates the current sparse parameter based on the gradient aggregation result. The current sparse parameter includes some original sparse parameters of the training card and the received sparse parameter. Each training card in the first training node stores an updated sparse parameter to a corresponding parameter node.

In the procedure shown in FIG. 7, gradient segmentation is performed based on a training card. In another example, in step 705, segmentation may also be performed based on a parameter node, to ensure that sparse parameters stored in a same parameter node are stored and segmented to a same training card. For example, a mapping relationship between a parameter node and a training card may be pre-stored. In the mapping relationship, a parameter node may correspond to one or more training cards. An index value is determined for any training card based on a feature of a sparse parameter. The index value may correspond to one parameter node. Then, a training card corresponding to the parameter node may be determined based on the mapping relationship. In this way, after updating the sparse parameter, the training card may use a feature of one sparse parameter to determine the corresponding parameter node, and does not need to use a feature of each sparse parameter to determine the corresponding parameter node.

For better understanding of the procedure shown in FIG. 7, the following uses an example in which one parameter node and one training node are deployed on a same physical node for description.

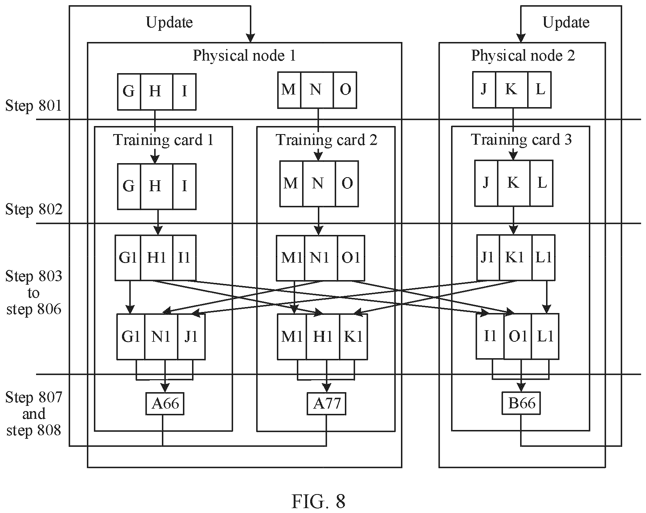

Refer to FIG. 8. The system architecture 100 includes two physical nodes. The two physical nodes are a physical node 1 and a physical node 2. Two training cards are inserted into the physical node 1. The two training cards are a training card 1 and a training card 2. One training card is inserted into the physical node 2. The training card is a training card 3. The training card may be an NPU.

Step 801: A training node in the physical node 1 obtains to-be-trained data in a current round of training on each training card. The to-be-trained data of each training card is referred to as min-batch data. A CPU of the physical node 1 calculates a feature of a sparse parameter required by the to-be-trained data of each training card, and obtains the sparse parameter from a corresponding parameter node based on the feature of the sparse parameter.

Sparse parameters used by the training card 1 are represented as W11, and are full sparse parameters. It is assumed that W11 includes three subsets G, H, and I. Sparse parameters used by the training card 2 are represented as W12, and are full sparse parameters. It is assumed that W12 includes three subsets M, N, and O.

Step 802: The physical node 1 transmits, to the two training cards, min-batch data corresponding to each piece of to-be-trained data, a sparse parameter, and a feature of the sparse parameter.

Step 803: Each training card in the physical node 1 trains, by using the corresponding mini-batch data, the sparse parameter corresponding to the mini-batch data, to obtain a gradient corresponding to the sparse parameter. The sparse parameters on the training card 1 and obtained gradients are represented as subsets G1, H1, and I1. The sparse parameters on the training card 2 and obtained gradients are represented as subsets M1, N1, and O1. Each subset includes the sparse parameter and the corresponding gradient.

Step 804: The training card 1 in the physical node 1 determines the subsets G1, H1, and I1 based on features of the sparse parameters in the subsets G1, H1, and I1. Training cards respectively corresponding to the subsets G1, H1, and I1 are the training card 1, the training card 2, and the training card 3 in the physical node 2. The training card 2 in the physical node 1 determines the subsets M1, N1, and O1 based on features of the sparse parameters in the subsets M1, N1, and O1. Training cards respectively corresponding to the subsets M1, N1, and O1 are the training card 2 in the physical node 1, the training card 1 in the physical node 1, and the training card 3 in the physical node 2.

Step 805: The training card 1 in the physical node 1 sends the subset I1 to the training card 3 in the physical node 2. The training card 1 in the physical node 1 sends the subset H1 to the training card 2 in the physical node 1. The training card 2 in the physical node 1 sends the subset O1 to the training card 3 in the physical node 2. The training card 2 in the physical node 1 sends the subset N1 to the training card 1 in the physical node 1.

Step 806: The training card 1 in the physical node 1 receives the subset N1 sent by the training card 2, and receives a subset J1 sent by the training card 3 in the physical node 2. The training card 2 in the physical node 1 receives the subset H1 sent by the training card 1, and receives a subset K1 sent by the training card 3 in the physical node 2.

Step 807: The training card 1 in the physical node 1 aggregates the gradients in the subsets N1, G1, and J1 to obtain a gradient aggregation result A66, and updates the sparse parameters in the subsets N1, G1, and J1 based on the gradient aggregation result A66. The training card 2 in the physical node 1 aggregates the gradients in the subsets M1, H1, and K1 to obtain a gradient aggregation result A77, and updates the sparse parameters in the subsets M1, H1, and K1 based on the gradient aggregation result A77.

Step 808: The training card 1 and the training card 2 in the physical node 1 update updated sparse parameters to corresponding parameter nodes.

The foregoing first training card is any training card in the physical node.

In FIG. 8, processing of the physical node 2 is similar to that of the physical node 1. Sparse parameters obtained by the physical node 2 are represented as W13, and include three subsets J, K, and L. After the training card 3 in the physical node 2 calculates gradients, subsets J1, K1, and L1 are obtained. The subsets J1, K1, and L1 include sparse parameters and corresponding gradients. The training card 3 in the physical node 2 aggregates the gradients in subsets L1, I1, and O1 to obtain a gradient aggregation result B66, and updates the sparse parameters in the subsets L1, I1, and O1 based on the gradient aggregation result B66.

In the solution shown in FIG. 8, a training card is used for gradient aggregation and parameter update. Compared with a conventional manner in which a parameter node performs parameter update, this manner reduces memory occupation of CPU and physical node, so that gradient aggregation and parameter update efficiency is higher. In addition, when there is an inter-card transmission network, dependence of data transmission on a host network can be reduced, and a bottleneck of the host network can be alleviated.

In addition, a plurality of training cards in a training node do not need to synchronize sparse parameters in the node, and an advantage of parallel processing of the plurality of training cards can be fully utilized. In addition, the training card can directly perform transmission after calculating the gradient, and no more complex operation is required.

In this embodiment of this application, it is assumed that a network data transmission amount of sparse parameters on a single training card is W_k, and in a process of obtaining sparse parameters, an upper limit of a total network data transmission amount of the sparse parameters is N_worker*N_device_per_worker*W_k. In a scenario in which a parameter node and a training node are deployed on a same physical node, in a process of obtaining a sparse parameter, a network data transmission amount of the sparse parameter is (N_worker-1)*N_device_per_worker*W_k/N_worker. N_worker indicates a quantity of training nodes. N_device_per_worker indicates a quantity of training cards in each training node.

In a process of transmitting sparse parameters and corresponding gradients, a network data transmission amount of a single training node is (N_worker-1)*(W_k+G_k)/N_worker. N_worker indicates a quantity of training nodes. G_k indicates a gradient corresponding to a sparse parameter on the single training node. Data transmission inside the training node is not counted in the network data transmission amount. When gradient compression is not considered, W_k is equal to G_k, and the network data transmission amount of the single training node may also be represented as 2*(N_worker-1)*G_k/N_worker. Herein, multiplying by 2 is because the sparse parameter also needs to be transmitted.

In a batch data training process, in a scenario in which a parameter node and a training node are deployed on the same physical node, the network data transmission amount decreases to (N_worker-1)*N_device_per_worker*W_k/N_worker+(N_worker-1)*(W_k+G _k).

In addition, in a scenario in which a parameter node and a training node are not deployed on a same physical node, in a process of updating a sparse parameter to the parameter node, the network data transmission amount is (N_worker-1)*G_k/N_worker.

In an example, an embodiment of this application provides a computer program product. The computer program product includes computer instructions. The computer instructions are stored in a computer-readable storage medium. A processor of a computer device reads the computer instructions from the computer-readable storage medium. The processor executes the computer instructions, to enable the computer device to perform a part of the method performed by the first training node in the procedure shown in FIG. 4.

A person of ordinary skill in the art may be aware that the method steps and units described in embodiments disclosed in this specification may be implemented by electronic hardware, computer software, or a combination thereof. To clearly describe interchangeability between hardware and software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In the several embodiments provided in this application, it should be understood that the disclosed system architecture, apparatus, and method may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or modules, or electrical connections, mechanical connections, or connections in other forms.

The modules described as separate parts may or may not be physically separate, and parts displayed as modules may or may not be physical modules, and may be located at one position, or may be distributed on a plurality of network modules. Some or all of the modules may be selected based on actual requirements to implement the objectives of the solutions of embodiments of this application.

In addition, modules in embodiments of this application may be integrated into one processing module, each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on such understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium capable of storing program code, such as a USB flash drive, a removable hard disk, a ROM, a RAM, a magnetic disk, or an optical disc.

The words such as "first" and "second" in this application are used to distinguish between same or similar items that have substantially a same effect and function. It should be understood that there is no logical or temporal dependency between "first" and "second", and quantities and an execution order are not limited either. It should be further understood that, although terms such as "first" and "second" are used to describe the elements in the foregoing description, these elements should not be limited by the terms. These terms are simply used to distinguish one element from another. For example, without departing from the scope of various examples, a first sparse parameter may be referred to as a second sparse parameter, and similarly, a second sparse parameter may be referred to as a first sparse parameter. Both the first sparse parameter and the second sparse parameter may be sparse parameters, and in some cases, may be separate and different sparse parameters.

The term "at least one" in this application means one or more, and "a plurality of" in this application means two or more.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A sparse parameter update method, applied to an artificial intelligence model training system, wherein the system comprises a first parameter node, a first training node, and a second training node, the first training node comprises a first training card, the second training node comprises a second training card, and the method comprises:
obtaining, by the first training node, a first parameter set from the first parameter node, wherein the first parameter set comprises a plurality of parameters;
training, by the first training node, to-be-trained data by using the plurality of parameters, to obtain a first gradient set, wherein the first gradient set comprises a gradient that is in a plurality of gradients corresponding to the plurality of parameters in the first parameter set and that is to be distributed to the second training card;
sending, by the first training node, the first gradient set and a parameter corresponding to the gradient in the first gradient set to the second training card;
updating, by the second training card based on the gradient in the first gradient set, the parameter corresponding to the gradient in the first gradient set; and
sending, by the second training card, an updated parameter to the first parameter node.

2. The method according to claim 1, wherein the method further comprises:
obtaining, by the first training node, one second parameter set from each of N second parameter nodes, wherein each second parameter set comprises a plurality of parameters; and
the training, by the first training node, to-be-trained data by using the plurality of parameters, to obtain a first gradient set comprises:
training, by a plurality of training cards in the first training node, the to-be-trained data by using the first parameter set and parameters in obtained N second parameter sets, wherein the plurality of training cards comprise the first training card;
aggregating, by the first training card, gradient data obtained after the plurality of training cards complete training; and
segmenting, by the first training card, aggregated gradient data based on a parameter node, to obtain the first gradient set corresponding to the first parameter node, or segmenting, by the first training card, aggregated gradient data based on a training node, to obtain the first gradient set corresponding to the second training node, wherein the first gradient set corresponding to the second training node further comprises a gradient that is in a plurality of gradients corresponding to the plurality of parameters in the N second parameter sets and that is to be distributed to the second training card.

3. The method according to claim 1, wherein the method further comprises:
obtaining, by the first training node, one second parameter set from each of N second parameter nodes, wherein each second parameter set comprises a plurality of parameters; and
the training, by the first training node, to-be-trained data by using the plurality of parameters, to obtain a first gradient set comprises:
training, by a plurality of training cards in the first training node, the to-be-trained data by using the first parameter set and parameters in obtained N second parameter sets, wherein the plurality of training cards comprise the first training card; and
segmenting, by the first training card based on each training card in the system, gradient data obtained after the first training card completes training, to obtain the first gradient set corresponding to the second training card, wherein the first gradient set further comprises a gradient that is in the gradient data obtained after the first training card completes training, that corresponds to a parameter in the N second parameter sets, and that is to be distributed to the second training card.

4. The method according to any one of claims 1 to 3, wherein the updating, by the second training card based on the gradient in the first gradient set, the parameter corresponding to the gradient in the first gradient set comprises:
aggregating, by the second training card, gradients in a plurality of gradient sets received from a plurality of training nodes in the system, wherein the plurality of gradient sets comprise the first gradient set; and
updating, by using an aggregated gradient, the parameter corresponding to the gradient in the first gradient set.

5. The method according to claim 2, wherein the segmenting, by the first training card, aggregated gradient data based on a parameter node, to obtain the first gradient set corresponding to the first parameter node comprises:
determining an index value based on a feature of a parameter corresponding to each piece of aggregated gradient data, wherein one index value indicates one parameter node; and
classifying a gradient corresponding to a parameter having a first index value into the first gradient set, wherein the first index value indicates the first parameter node.

6. A first training node, wherein the first training node belongs to an artificial intelligence model training system, the system further comprises a first parameter node and a second training node, the first training node comprises a first training card, and the second training node comprises a second training card; and
the first training node is configured to:
obtain a first parameter set from the first parameter node, wherein the first parameter set comprises a plurality of parameters;
train to-be-trained data by using the plurality of parameters, to obtain a first gradient set, wherein the first gradient set comprises a gradient that is in a plurality of gradients corresponding to the plurality of parameters in the first parameter set and that is to be distributed to the second training card; and
send the first gradient set and a parameter corresponding to the gradient in the first gradient set to the second training card, to enable the second training card to update the parameter corresponding to the gradient in the first gradient set.

7. The first training node according to claim 6, wherein the first training node is further configured to:
obtain one second parameter set from each of N second parameter nodes, wherein each second parameter set comprises a plurality of parameters;
a plurality of training cards in the first training node are configured to:
train the to-be-trained data by using the first parameter set and parameters in obtained N second parameter sets, wherein the plurality of training cards comprise the first training card; and
the first training card is configured to:
aggregate gradient data obtained after the plurality of training cards complete training; and
segment aggregated gradient data based on a parameter node, to obtain the first gradient set corresponding to the first parameter node, or segment aggregated gradient data based on a training node, to obtain the first gradient set corresponding to the second training node, wherein the first gradient set further comprises a gradient that is in a plurality of gradients corresponding to the plurality of parameters in the N second parameter sets and that is to be distributed to the second training card.

8. The first training node according to claim 6, wherein the first training node is further configured to:
obtain one second parameter set from each of N second parameter nodes, wherein each second parameter set comprises a plurality of parameters;
a plurality of training cards in the first training node are configured to:
train the to-be-trained data by using the first parameter set and parameters in obtained N second parameter sets, wherein the plurality of training cards comprise the first training card; and
the first training card is configured to:
segment, based on each training card in the system, gradient data obtained after the first training card completes training, to obtain the first gradient set corresponding to the second training card, wherein the first gradient set further comprises a gradient that is in the gradient data obtained after the first training card completes training, that corresponds to a parameter in the N second parameter sets, and that is to be distributed to the second training card.

9. A computer device, wherein the computer device comprises a memory and a processor;
the memory stores computer instructions; and
the processor is configured to execute the computer instructions, to enable the computer device to perform the method performed by the training node according to any one of claims 1 to 5.

10. A computer-readable storage medium, wherein the storage medium stores at least one computer instruction; and
the computer instruction is read by a processor, to enable a computer device to perform the method performed by the training node according to any one of claims 1 to 5.
